# EUROPEAN PATENT SPECIFICATION

(11) **EP 3 396 800 B1**
(45) Date of publication and mention of the grant of the patent: **14.10.2020**
(21) Application number: 18169316.9
(22) Date of filing: 25.04.2018
(51) Int. Cl.: H02G 1/08, H02G 3/04, H02G 3/30

(54) **APPARATUS FOR ROUTING CABLES THROUGH A CABLE SUPPORT SYSTEM**
VORRICHTUNG ZUM ROUTEN VON KABELN DURCH EINE KABELTRÄGERSYSTEM
APPAREIL POUR ACHEMINER DES CÂBLES À TRAVERS UN SYSTÈME DE SUPPORT DE CÂBLE

(30) Priority: 28.04.2017 US 201762491720 P
(43) Date of publication of application: 31.10.2018
(73) Proprietor: Cable Management Solutions, Inc., Bayshore NY 11706 (US)
(72) Inventor: JETTE, Roger, West Islip, NY 11795-4536 (US)
(74) Representative: Nuss, Laurent

(56) References cited:
- EP-A1- 1 104 948
- WO-A1-2013/061111
- US-A- 4 296 837
- US-A1- 2010 051 886
- US-A1- 2012 175 470

## Description

### CROSS-REFERENCE TO RELATED APPLICATIONS

This application claims the benefit of U.S. Provisional Patent Application No. 62/491,720, titled "Apparatus for Routing Cables Through a Cable Support System" and filed on April 28, 2017.

### BACKGROUND

### Technical Field

The present disclosure relates to cable support systems. More particularly, the present disclosure relates to an apparatus facilitating the routing of cables through a cable support system.

### Description of Related Art

Due to the increasing usage of communication, data, and other cable-dependent systems, greater numbers of cables are required to interconnect the various systems with one another and with their various peripheral devices. As a result, various cable support systems have been developed to deal with the task of organizing and routing the numerous cables to their destinations.

Once the cable support system is installed as required, it is often necessary to route one or more cables or bundles of cables through the cable support system to interconnect the various cable-dependent systems with one another and their various peripheral devices. Routing such cables and/or cable bundles can be a tedious, time-consuming process and/or prove difficult as cables and cable bundles can become snagged on the cable support system itself or previously-routed cables or cable bundles.
US 2010/051886 A1 describes a pulling grip assembly for fiber optic cables. EP 1 104 948 A1 discloses spacers for laying cables in a pipe. US 2012/0175470 A1 discloses a cable support apparatus including a flexible spline and a plurality of support members extending along the length of the flexible spline.

### SUMMARY

To the extent consistent, any of the aspects detailed herein may be used in conjunction with any or all of the other aspects detailed herein.

A system comprising a cable support apparatus defining a longitudinal passageway defining a longitudinal passageway for retaining one or more cablestherein and a cable routing apparatus configured to facilitate routing of one or more cables through the cable support apparatus, said cable support apparatus comprising a head and a pull assembly. The head includes a barrel and a plurality of arms. The barrel defines a longitudinal axis and includes a forward end portion and a rear end portion. The arms are engaged to the barrel, radially-spaced about the longitudinal axis, extend rearwardly of the barrel, and define an interior area therebetween. The pull assembly is operably coupled to the head and includes an elongated member and a base. The elongated member extends forwardly of the head while the base is disposed within the interior area and configured to operably engage an end portion of at least one cable within the interior area. The elongated member of the pull assembly is configured to pull the head through the longitudinal passageway to thereby pull the end portion of the at least one cable through the longitudinal passageway while the plurality of arms of the head facilitate centering of the cable routing apparatus within the longitudinal passageway.

In an aspect of the present disclosure, the pull assembly further includes a sock extending rearwardly from the base and configured to at least partially surround the end portion of the at least one cable. In such aspects, the base may be disposed about an end portion of the sock to engage the end portion of the at least one cable therein.

In another aspect of the present disclosure, the elongated member of the pull assembly is engaged to the base rearwardly of the barrel of the head and extends through a lumen defined through the barrel of the head forwardly of the barrel.

In another aspect of the present disclosure, each of the plurality of arms is outwardly-bowed relative to the longitudinal axis such that the interior area defines a bulbous configuration.

In yet another aspect of the present disclosure, each of the plurality of arms is flexible.

In still another aspect of the present disclosure, the barrel defines a cylindrical configuration.

In still yet another aspect of the present disclosure, each of the plurality of arms extends longitudinally along a portion of an outer surface of the barrel and is welded to the outer surface of the barrel.

In such aspects, the base is coupled between the sock and the elongated member.

In another aspect of the present disclosure, each of the plurality of arms is outwardly-bowed such that the plurality of arms cooperate to define a largest-diameter portion of the cable routing apparatus. In such aspects, a diameter of the largest-diameter portion of the cable routing apparatus may generally approximate a diameter of the longitudinal passageway of the cable support apparatus.

### BRIEF DESCRIPTION OF THE DRAWINGS

Various aspects and features of the present disclosure are described herein with reference to the drawings, wherein like reference numerals identify similar or identical elements and:
FIG. 1 is a perspective view of a cable routing apparatus provided in accordance with the present disclosure, including a cable bundle operably coupled thereto;
FIG. 2 is an enlarged, perspective view of a head of the cable routing apparatus of FIG. 1;
FIG. 3A is a side view illustrating the initial routing of the cable bundle of FIG. 1 through a cable support system using the cable routing apparatus of FIG. 1;
FIG. 3B is a side view illustrating further routing of the cable bundle of FIG. 1 through the cable support system of FIG. 3A; and
FIG. 3C is a side view illustrating routing of a second cable bundle through the cable support system of FIG. 3A.

### DETAILED DESCRIPTION

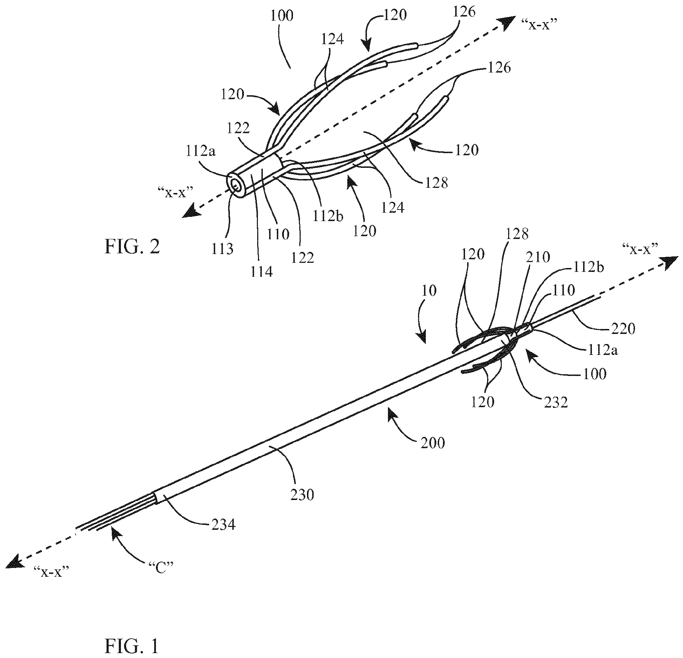

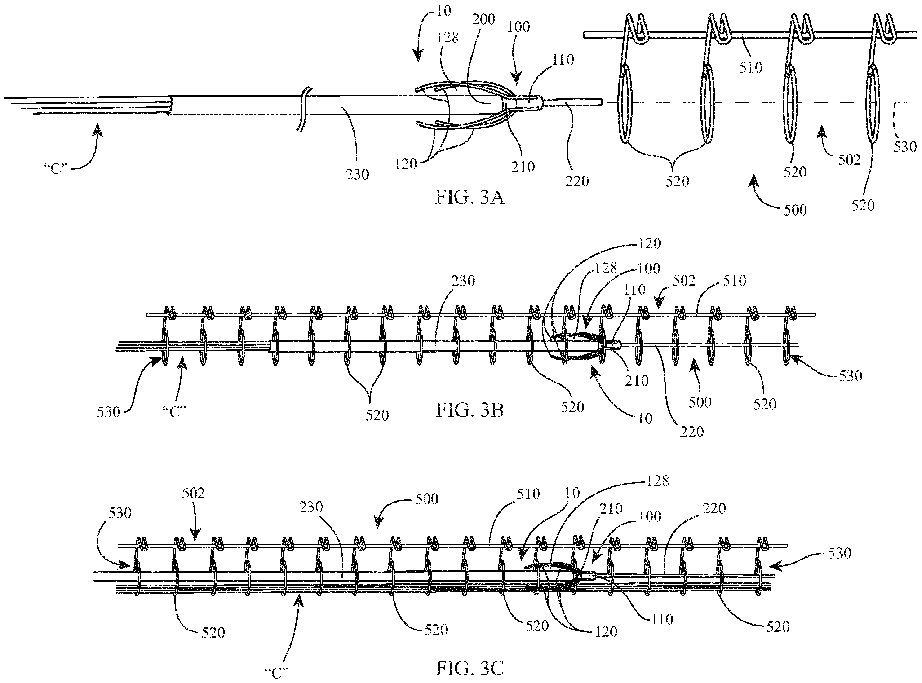

Turning now to FIGS. 1-2, a cable routing apparatus provided in accordance with the present disclosure and configured to facilitate the routing of cables "C" through a cable support system 500 (FIGS. 3A-3C) is shown generally identified by reference numeral 10. Although detailed hereinbelow for use with cable support system 500 (FIGS. 3A-3C), cable routing apparatus 10 may likewise be used for routing one or more cables "C" through any suitable cable support system.

Cable routing apparatus 10 includes a head 100 defining a longitudinal axis "X-X" and a pull assembly 200 configured to operably couple to head 100. Pull assembly 200, as detailed below, includes a base 210, an elongated member 220 configured to extend from base 210 through head 100 and forwardly thereof along longitudinal axis "X-X," and a sock 230 configured to extend from base 210 rearwardly of head 100 about longitudinal axis "X-X."

With reference in particular to FIG. 2, head 100 of cable routing apparatus 10 includes a barrel 110 and a plurality of arms 120 extending from barrel 110. Barrel 110 defines longitudinal axis "X-X" therethrough and includes a forward end portion 112a and a rear end portion 112b, both of which are aligned on longitudinal axis "X-X." Barrel 110 has a generally tubular configuration, and defines a lumen 113 extending longitudinally therethrough.

Arms 120 of head 100 are radially-spaced about barrel 110. More specifically, arms 120 are welded or otherwise engaged to an outer cylindrical surface 114 of barrel 110. Although four (4) arms 120 are illustrated in the drawings, it is contemplated that any suitable number of arms 120 may be provided. Each arm 120 defines a flexible configuration formed from a single piece of wire stock, e.g. stainless steel wire, and includes a fixed end portion 122 engaged to outer cylindrical surface 114 of barrel 110, a body portion 124 extending from fixed end portion 122 rearwardly of barrel 110, and a free end portion 126 spaced-apart from the rear end potion 112b of barrel 110.

Continuing with reference to FIG. 2, fixed end portions 122 of arms 120 may extend longitudinally along outer cylindrical surface 114 of barrel 110 and may be welded or otherwise engaged thereto. As noted above, fixed end portions 122 are radially-spaced about barrel 110. Fixed end portions 122 may be equally-spaced about barrel 110 or arranged in any other suitable configuration about barrel 110.

Body portions 124 of arms 120 extend from the respective fixed end portions 122 of arms 120 and barrel 110 rearwardly of barrel 110 about longitudinal axis "X-X." Body portions 124 define arcuate configurations wherein each body portion 124 bows radially outwardly relative to the fixed and free end portions 122, 126 of the respective arm 120. More specifically, body portions 124 bow outwardly beyond the outer dimensions of barrel 110 and cooperate to define a bulbous configuration. The bulbous configuration formed by body portions 124 of arms 120 defines an interior area 128.

Referring again to FIG. 1, pull assembly 200, as noted above, is configured to operably couple to head 100 and includes a base 210, an elongated member 220, and a sock 230.

Base 210 of pull assembly 200 is configured for positioning within the interior area 128 defined by body portions 124 of arms 120 of head 100. Base portion 210, more specifically, is configured for positioning adjacent rear end portion 112b of barrel 110 of head 100 and defines a diameter greater than a diameter of lumen 113 of barrel 110 such that base 210 is inhibited from passing forwardly through lumen 113.

Elongated member 220 is attached to and extends from base 210 through lumen 113 of barrel 110 of head 100 and forwardly therefrom along longitudinal axis "X-X." Elongated member 220 may be permanently attached to base 210 (via adhesion, mechanical engagement, or formation therewith) or may be releasable therefrom (via any suitable structure, material, or mechanism). Elongated member 220 may be a rope, cable, tube, or other suitable flexible elongated component and defines a diameter less than the diameter of lumen 113 of barrel 110 to enable elongated member 220 to extend through lumen 113 of barrel 110. As such, with base 210 disposed rearwardly of barrel 110, inhibited from passing therethrough, and with elongated member 220 extending from through lumen 113 of barrel 110 forwardly therefrom, pulling of elongated member 220 in a forward direction along longitudinal axis "X-X" likewise pulls head 100 in a forward direction along longitudinal axis "X-X." Elongated member 220 is flexible to facilitate manipulation thereof and, as detailed below, is configured to facilitate pulling cable routing apparatus 10 and one or more cables "C" coupled thereto through a cable support system 500 (FIGS. 3A-3C).

Continuing with reference to FIG. 1, sock 230 of pull assembly 200 is attached to base 210 and extends rearwardly from base 210 and head 100 about longitudinal axis "X-X." Sock 230 defines a generally tubular configuration and may be formed from a mesh, fabric, or other suitable material. Sock 230 defines a forward end portion 232 configured to engage base 210, and a rear end portion 234. The material of sock 230 may be wrapped about the end portion of one or more cables "C" to form sock 230 therearound, or sock 230 may be configured to receive the end portion of one or more cables "C" through rear end portion 234 thereof. Sock 230 is configured to extend rearwardly beyond arms 120 of head 100 and about cables "C" over a portion of the length thereof.

Base 210 may be engagable about sock 230 under compression to enclose forward end portion 232 of sock 230 and retain the end portions of cables "C" therein under compression. Alternatively or additionally, a suitable retention component, e.g., strap, tie, clamp, etc., associated with sock 230 and/or base 210 may be provided for releasably engaging the end portions of the cables "C" within sock 230. Further still, base 210 may be an integral part of sock 230 formed from the bunched, closed forward end portion 232 of sock 230.

In embodiments where the material of sock 230 is wrapped about the one or more cables "C" to form sock 230 therearound, the material for sock 230 may be provided on a spool (not shown), allowing the user to wrap an appropriate amount of material about the cables "C" to form sock 230 and then cut the material from the spool (not shown).

Turning to FIGS. 3A-3C, in conjunction with FIGS. 1 and 2, the use of cable routing apparatus 10 to route one or more cables "C" through a cable support system 500 is described. For the purposes herein, cable support system 500 is generally described, keeping in mind, as noted above, that cable routing apparatus 10 may likewise be used for routing one or more cables "C" through any suitable cable-supporting apparatus such as a pipe (e.g., PVC or other suitable pipe), tube (e.g., electrical metallic tubing (EMT)), or other suitable cable-supporting apparatus made of any suitable material, e.g., metal or plastic.

Initially, cable routing apparatus 10 is assembled and one or more cables "C" engaged thereto. In order to assemble apparatus and engage the one or more cables "C" thereto, sock 230 is disposed about end portions of the one or more cables "C." For example, the material forming sock 230 may be rolled up about the end portions of the one or more cables "C" to form sock 230 thereabout. Base 210 is attached to sock 230 and elongated member 220 to couple sock 230 and elongated member 220 with one another. If not already accomplished, the end portions of the one or more cables "C" are secured within sock 230. Elongated member 220 is routed through lumen 113 of barrel 110 of head 100. The above-noted assembly may be performed in any suitable order. Once cable routing apparatus 10 is assembled with one or more cables "C" engaged thereto, cable routing apparatus 10 may be routed through a cable support system 500, as detailed below.

Cable support system 500 includes one or more cable support apparatuses 502 each including an elongated flexible spine 510 having a plurality of spaced-apart support members 520 disposed along the length of elongated flexible spine 510. Flexible spine 510 may be manipulated to define any suitable configuration of cable support system 500, e.g., to allow the cable support apparatus 502 to snake over and around obstacles. Support members 520 cooperate to define a longitudinal passageway 530 extending along the length of flexible spine 510. Support members 520 may be configured such that longitudinal passageway 530 defines a circular cross-sectional configuration, as shown, although it is also contemplated that longitudinal passageway 530 defines a rectangular cross-sectional configuration, another polygonal cross-sectional configuration, or any other suitable configuration. The one or more cable support apparatuses 502 may be joined to one another in end-to-end fashion and/or in intersecting fashion to form a cable support system 500 having any suitable configuration.

In embodiments, cable routing apparatus 10 may be configured such that the largest diametered portion thereof (defined by the outwardly-bowed arms 120 of head 100) generally approximates the diameter of longitudinal passageway 530 (as defined by the plurality of support members 520). Generally approximates, for the purposes herein, is within about 20%. As such, in embodiments where the largest diametered portion of cable routing apparatus 10 generally approximates the diameter of longitudinal passageway 530, the diameter of the largest diametered portion of cable routing apparatus 10 is within a difference of plus or minus 20% of the diameter of longitudinal passageway 530.

With particular reference to FIG. 3A, in order to route the one or more cables "C" through cable support system 500, elongated member 220 of cable routing apparatus 10 is pulled into and through the longitudinal passageway 530 defined by the cable support apparatus(es) 502 of cable support system 500. With additional reference to FIG. 3B, as elongated member 220 of cable routing apparatus 10 is pulled into and through longitudinal passageway 530, excursions of head 100 of cable routing apparatus 10 may result from a change in direction of the cable support apparatus 502, changing configuration of cable support system 500, other cables (or components) disposed within the cable support apparatus 502, etc. Arms 120 of head 100 of cable routing apparatus 10 account for these excursions and function to re-center head 100 within longitudinal passageway 530 to facilitate routing of cables "C" therethrough and inhibit snagging. More specifically, the radially-arranged, flexible, bowed arms 120 are configured to contact the support members 520 of cable support apparatus 502, or other components or obstacles, and bias head 100 back towards a generally centered orientation within cable support apparatus 502. As a result of this configuration, the cables "C" are inhibited from catching or snagging on previously-laid cables, other components, and/or obstacles, while the smooth, bowed outer surfaces of arms 120 facilitate movement of cable routing apparatus 10 through cable support apparatus 502 with minimal resistance. In addition, with arms 120 surrounding interior area 128 and with the end portions of cables "C" secured within sock 230 within interior area 128, the end portions of cables "C" are maintained spaced-apart from previously laid cables and other components disposed within longitudinal passageway 530, inhibiting snagging or tangling therewith. Sock 230 also inhibits such snagging or tangling.

With reference to FIG. 3C, once cables "C" has been routed through cable support apparatus(es) 502 of cable support system 500 as desired, cable routing apparatus 10 may be disengaged from the end portions of cables "C," reinstalled about another set of one or more cables (not shown) and pulled through the cable support apparatus(es) 502 of cable support system 500 to route that set of one or more cables (not shown) therethrough.

The above-detailed use of cable routing apparatus 10 applies similarly to use of cable routing apparatus 10 for routing one or more cables "C" through any suitable cable-supporting apparatus such as a pipe (e.g., PVC or other suitable pipe), tube (e.g., electrical metallic tubing (EMT)), or other suitable cable-supporting apparatus made of any suitable material, e.g., metal or plastic.
From the foregoing and with reference to the various figure drawings, those skilled in the art will appreciate that certain modifications can also be made to the present disclosure without departing from the scope of the same. While several embodiments of the disclosure have been shown in the drawings, it is not intended that the disclosure be limited thereto, as it is intended that the disclosure be as broad in scope as the art will allow and that the specification be read likewise. Therefore, the above description should not be construed as limiting, but merely as exemplifications of particular embodiments. Those skilled in the art will envision other modifications within the scope of the claims appended hereto.

## Claims

1. A system, comprising:
a cable support apparatus (500) defining a longitudinal passageway (530) for retaining one or more cables ("C") therein; and
a cable routing apparatus (10) configured to facilitate routing of one or more cables ("C") through the cable support apparatus (500), said cable routing apparatus (10) comprising :
a head (100), including :
a barrel (110) defining a longitudinal axis ("X-X") and including a forward end portion (112a) and a rear end portion (112b); and
a plurality of arms (120) engaged to the barrel (110), the plurality of arms (120) radially-spaced about the longitudinal axis, extending rearwardly of the barrel, and defining an interior area (128) therebetween; and
a pull assembly (200) operably coupled to the head (100), the pull assembly (200) including:
an elongated member (220) extending forwardly of the head; and
a base (210) disposed within the interior area (128) and configured to operably engage an end portion of at least one cable ("C") within the interior area (128)
wherein the elongated member (220) of the pull assembly (200) is configured to pull the head (100) through the longitudinal passageway (530) to thereby pull the end portion of the at least one cable ("C") through the longitudinal passageway (530) while the plurality of arms (120) of the head (100) facilitate centering of the cable routing apparatus (10) within the longitudinal passageway (530) and wherein the cable support apparatus (500) includes an elongated spine (510) and a plurality of support members (520) spaced-apart along a length of the elongated spine (510), the support members (520) cooperating with one another to define the longitudinal passageway (530) extending along the length of the elongated spine (510).

2. The system according to claim 1, wherein the pull assembly (200) further includes a sock (230) extending rearwardly from the base (210) and configured to at least partially surround the end portion of the at least one cable ("C").

3. The system according to claim 2, wherein the base (210) is disposed about an end portion of the sock (230) to engage the end portion of the at least one cable ("C") therein.

4. The system according to any one of the preceding claims, wherein the elongated member (220) of the pull assembly (200) is engaged to the base rearwardly of the barrel of the head and extends through a lumen defined through the barrel (110) of the head (100) forwardly of the barrel (110).

5. The system according to any one of the preceding claims, wherein each of the plurality of arms (120) is outwardly-bowed relative to the longitudinal axis such that the interior area (128) defines a bulbous configuration.

6. The system according to any one of the preceding claims, wherein each of the plurality of arms (120) is flexible.

7. The system according to any one of the preceding claims, wherein the barrel (110) defines a cylindrical configuration.

8. The system according to claim 7, wherein each of the plurality of arms (120) extends longitudinally along a portion of an outer surface of the barrel (110) and is welded to the outer surface of the barrel (110).

9. The system according to anyone of the preceding claims, wherein a diameter of a largest-diameter portion of the cable routing apparatus (10) generally approximates a diameter of the longitudinal passageway (530) of the cable support apparatus (500).

## Patentansprüche

1. System, umfassend:
eine Kabelstützeinrichtung (500), die einen Längsdurchgang (530) zum Halten eines oder mehrerer Kabel ("C") darin definiert; und
eine Kabelführungseinrichtung (10), die konfiguriert ist, um ein Führen eines oder mehrerer Kabel ("C") durch die Kabelstützeinrichtung (500) zu ermöglichen, wobei die Kabelführungseinrichtung (10) umfasst:
einen Kopf (100), einschließlich:
eines Schafts (110), der eine Längsachse ("X-X") definiert und einen vorderen Endabschnitt (112a) und einen hinteren Endabschnitt (112b) einschließt; und
mehrerer Arme (120), die mit dem Schaft (110) in Eingriff stehen, wobei die mehreren Arme (120) um die Längsachse herum radial beabstandet sind, sich von dem Schaft nach hinten erstrecken, und einen Innenbereich (128) dazwischen definieren; und
eine Zuganordnung (200), die mit dem Kopf (100) wirkgekoppelt ist, wobei die Zuganordnung (200) einschließt:
ein längliches Element (220), das sich von dem Kopf nach vorne erstreckt; und
eine Basis (210), die innerhalb des Innenbereichs (128) angeordnet ist und
konfiguriert ist, um einen Endabschnitt von wenigstens einem Kabel ("C") innerhalb des Innenbereichs (128) betriebsmäßig in Eingriff zu nehmen
wobei das längliche Element (220) der Zuganordnung (200) konfiguriert ist, um den Kopf (100) durch den Längsdurchgang (530) zu ziehen, um dadurch den Endabschnitt des wenigstens einen Kabels ("C") durch den Längsdurchgang (530) zu ziehen, während die mehreren Arme (120) des Kopfes (100) ein Zentrieren der Kabelführungseinrichtung (10) innerhalb des Längsdurchgangs (530) ermöglichen, und wobei die Kabelstützeinrichtung (500) einen länglichen Stab (510) und mehrere Stützelemente (520), die entlang einer Länge des länglichen Stabs (510) voneinander beabstandet sind, einschließt, wobei die Stützelemente (520) zusammenwirken, um den Längsdurchgang (530), der sich entlang der Länge des länglichen Stabs (510) erstreckt, zu definieren.

2. System nach Anspruch 1, wobei die Zuganordnung (200) ferner einen Ziehstrumpf (230) einschließt, der sich von der Basis (210) nach hinten erstreckt und konfiguriert ist, um den Endabschnitt des wenigstens einen Kabels ("C") wenigstens teilweise zu ummanteln.

3. System nach Anspruch 2, wobei die Basis (210) um einen Endabschnitt des Ziehstrumpfs (230) herum angeordnet ist, um den Endabschnitt des wenigstens einen Kabels ("C") darin in Eingriff zu nehmen.

4. System nach einem der vorhergehenden Ansprüche, wobei das längliche Element (220) der Zuganordnung (200) mit der Basis rückwärtig von dem Schaft des Kopfes in Eingriff steht und sich durch einen Hohlraum, der durch den Schaft (110) des Kopfes (100) definiert ist, nach vorne von dem Schaft (110) aus erstreckt.

5. System nach einem der vorhergehenden Ansprüche, wobei jeder der mehreren Arme (120) relativ zu der Längsachse derart nach außen gebogen ist, dass der Innenbereich (128) eine bauchige Konfiguration definiert.

6. System nach einem der vorhergehenden Ansprüche, wobei jeder der mehreren Arme (120) flexibel ist.

7. System nach einem der vorhergehenden Ansprüche, wobei der Schaft (110) eine zylindrische Konfiguration definiert.

8. System nach Anspruch 7, wobei sich jeder der mehreren Arme (120) in Längsrichtung entlang eines Abschnitts einer Außenoberfläche des Schafts (110) erstreckt und mit der Außenoberfläche des Schafts (110) verschweißt ist.

9. System nach einem der vorhergehenden Ansprüche, wobei ein Durchmesser eines Abschnitts mit dem größten Durchmesser der Kabelführungseinrichtung (10) im Allgemeinen einem Durchmesser des Längsdurchgangs (530) der Kabelstützeinrichtung (500) nahekommt.

## Revendications

1. Système, comportant :
un appareil (500) de support de câble définissant un passage longitudinal (530) destiné à retenir un ou plusieurs câbles ("C") dans celui-ci ; et
un appareil (10) d'acheminement de câbles configuré pour faciliter l'acheminement d'un ou de plusieurs câbles ("C") à travers l'appareil (500) de support de câble, ledit appareil (10) d'acheminement de câbles comportant :
une tête (100), comprenant :
un fût (110) définissant un axe longitudinal ("X-X") et comprenant une partie (112a) d'extrémité avant et une partie (112b) d'extrémité arrière ; et
une pluralité de bras (120) en interaction avec le fût (110), la pluralité de bras (120) étant espacée radialement autour de l'axe longitudinal, s'étendant en arrière du fût et définissant une zone intérieure (128) entre ceux-ci ; et
un ensemble (200) de traction couplé fonctionnellement à la tête (100), l'ensemble (200) de traction comprenant :
un organe allongé (220) s'étendant en avant de la tête ; et
une base (210) disposée au sein de la zone intérieure (128) et configurée pour interagir fonctionnellement avec une partie d'extrémité d'au moins un câble ("C") au sein de la zone intérieure (128),
l'organe allongé (220) de l'ensemble (200) de traction étant configuré pour tirer la tête (100) à travers le passage longitudinal (530) afin de tirer ainsi la partie d'extrémité du ou des câbles ("C") à travers le passage longitudinal (530) tandis que la pluralité de bras (120) de la tête (100) facilite le centrage de l'appareil (10) d'acheminement de câbles à l'intérieur du passage longitudinal (530) et l'appareil (500) de support de câble comprenant une flèche allongée (510) et une pluralité d'organes (520) de support espacés les uns par rapport aux autres suivant une longueur de la flèche allongée (510), les organes (520) de support coopérant entre eux pour définir le passage longitudinal (530) s'étendant suivant la longueur de la flèche allongée (510).

2. Système selon la revendication 1, l'ensemble (200) de traction comprenant en outre un étui (230) s'étendant vers l'arrière à partir de la base (210) et configuré pour entourer au moins partiellement la partie d'extrémité du ou des câbles ("C").

3. Système selon la revendication 2, la base (210) étant disposée autour d'une partie d'extrémité de l'étui (230) pour engager la partie d'extrémité du ou des câbles ("C") dans celui-ci.

4. Système selon l'une quelconque des revendications précédentes, l'organe allongé (220) de l'ensemble (200) de traction étant en interaction avec la base en arrière du fût de la tête et s'étendant à travers une lumière définie à travers le fût (110) de la tête (100) en avant du fût (110).

5. Système selon l'une quelconque des revendications précédentes, chaque bras de la pluralité de bras (120) étant arqué vers l'extérieur par rapport à l'axe longitudinal de telle façon que la zone intérieure (128) définisse une configuration en bulbe.

6. Système selon l'une quelconque des revendications précédentes, chaque bras de la pluralité de bras (120) étant souple.

7. Système selon l'une quelconque des revendications précédentes, le fût (110) définissant une configuration cylindrique.

8. Système selon la revendication 7, chaque bras de la pluralité de bras (120) s'étendant longitudinalement le long d'une partie d'une surface extérieure du fût (110) et étant soudé à la surface extérieure du fût (110) .

9. Système selon l'une quelconque des revendications précédentes, un diamètre d'une partie de plus grand diamètre de l'appareil (10) d'acheminement de câbles approchant généralement un diamètre du passage longitudinal (530) de l'appareil (500) de support de câble.
